# EUROPÄISCHE PATENTSCHRIFT

(11) **EP 1 898 282 B1**
(45) Veröffentlichungstag und Bekanntmachung des Hinweises auf die Patenterteilung: **17.11.2010**
(21) Anmeldenummer: 06018945.3
(22) Anmeldetag: 11.09.2006
(51) Int. Cl.: G05B 19/05, G05B 17/02

(54) **Verfahren zum Test eines elektronischen Steuerungssystems**
Method of testing an electronic control system
Procédé pour tester un système de commande électronique

(43) Veröffentlichungstag der Anmeldung: 12.03.2008
(60) Teilanmeldung: 10001271.5
(73) Patentinhaber: dSPACE digital signal processing and control engineering GmbH, 33100 Paderborn (DE)
(72) Erfinder: Leinfellner, Robert, 33098 Paderborn (DE); Wölfer, Thomas, 33098 Paderborn (DE); Grosse Börger, Ralf, 33102 Paderborn (DE); Bruski, Nicola, Dr., 33102 Paderborn (DE); Miller, Eduard, 33106 Paderborn (DE); Krisp, Holger, 30890 Barsinghausen (DE); Richert, Jobst, Dr., 59558 Lippstadt (DE)
(74) Vertreter: Gesthuysen, von Rohr & Eggert

(56) Entgegenhaltungen:
- ABURIDA ET AL: "Real-time PC-based simulator of electric systems and drives" IEEE APEC 2002, [Online] 2002, XP002420325 Gefunden im Internet: URL:http://ieeexplore.ieee.org/iel5/7757/2 1321/00989281.pdf> [gefunden am 2007-02-14]
- JEAN BÉLANGER: "Real-Time Simulation Technologies for the Simulation of Electric Drives and Large Systems" SAE 2004, [Online] 2004, XP002420326 Gefunden im Internet: URL:http://www.rt-lab.com/files/eds_sae200 4.pdf> [gefunden am 2007-02-14]
- DSPACE: "AutomationDesk"[Online] Februar 2006 (2006-02), XP002420327 Gefunden im Internet: URL:http://www.dspace.de/shared/data/pdf/f lyer2006/dspace_flyer2006_automationdesk_e n.pdf> [gefunden am 2007-02-14]

## Beschreibung

Die Erfindung betrifft ein Verfahren zum Test wenigstens eines elektronischen Steuerungssystems, wobei das Steuerungssystem über einen Datenkanal mit einer Testvorrichtung in Verbindung steht, auf der Testvorrichtung wenigstens ein Umgebungsmodell berechnet wird und das Umgebungsmodell durch Ausgabe von Umgebungsmodelldaten über die Testvorrichtung an das Steuerungssystem und durch Aufnahme von Steuerungssystemdaten aus dem Steuerungssystem über den Datenkanal mit dem Steuerungssystem wechselwirkt, wobei auf der Testvorrichtung wenigstens ein Testmodell zur Beeinflussung des Umgebungsmodells und/oder der Berechnung des Umgebungsmodells und/ oder des elektronischen Steuerungssystems ausgeführt wird. Schließlich betrifft die Erfindung ferner eine Testvorrichtung zum Test wenigstens eines elektronischen Steuerungssystems, wobei die Testvorrichtung über einen Datenkanal mit dem Steuerungssystem in Verbindung bringbar ist, mit der Testvorrichtung wenigstens ein Umgebungsmodell berechnet wird und das Umgebungsmodell durch Ausgabe von Umgebungsmodelldaten an das Steuerungssystem und durch Aufnahme von Steuerungssystemdaten aus dem Steuerungssystem über den Datenkanal mit dem Steuerungssystem wechselwirken kann, wobei auf der Testvorrichtung wenigstens ein Testmodell zur Beeinflussung des Umgebungsmodells und/oder der Berechnung des Umgebungsmodells und/ oder des elektronischen Steuerungssystems ausgeführt wird.

Verfahren und Vorrichtungen der vorgenannten Art zum Test von elektronischen Steuerungssystemen sind aus der Praxis in verschiedener Form bekannt - z. B. Abourida, S. et al. "Real-Time PC-Based Simulator of Electric Systems and Drives APEC 2002", Proc. 17th Annu. IEEE Appl. Power Electron. Conf. Expo. (APEC), 2002, S. 433-438 - und werden vor allem in der angewandten Forschung und der industriellen Entwicklung in dem weiten Feld der Entwicklung und dem Einsatz elektronischer Steuerungssysteme verwendet, nämlich überall dort, wo im weitesten Sinne Prozeßsteuerungsaufgaben gelöst werden müssen. Der Begriff "Steuerungssystem" wird im folgenden als umfassende Bezeichnung für eine technische Einrichtung verwendet, die im wesentlichen für die Aufgaben Messen, Steuern, Regeln, Kalibrieren eingesetzt wird. Im weitesten Sinne handelt es sich dabei generell um ein elektronisches, programmsteuerbares System, das im Bereich automotiver Anwendungen üblicherweise Steuergerät genannt wird. Der Begriff "Steuerungssystem" ist nicht auf das beschränkt, was im systemtheoretischen Sinne einengend als Steuerung definiert wird, üblicherweise werden Regelungen auf Steuerungssystemen implementiert.

Die Entwicklung eines letztlich in der Serienfertigung einsetzbaren Steuerungssystems vollzieht sich meist in den folgenden Schritten:
In der Funktionsentwicklung wird mit Hilfe von mathematischen Modellierungswerkzeugen zunächst ein von der späteren Zielhardware und -umgebung abstrakter Reglerentwurf vorgenommen, wobei der so entwickelte Regler lediglich in einer Simulation mit dem ebenfalls nur als mathematisches Modell existierenden Prozeßabbild erprobt wird.
In einem nächsten Schritt, bei dem sogenannten Rapid Control Prototyping (RCP), wird der abstrakte Reglerentwurf mit Hilfe von Code-Generatoren in ein ausführbares Programm übersetzt, das auf einem üblicherweise sehr leistungsstarken - und mit dem letztlich zum Einsatz kommenden Serien-Steuerungssystem nicht vergleichbaren - echtzeitfähigen Steuerungssystem betrieben wird, Dieses RCP-Steuerungssystem interagiert dann über entsprechende I/O-Schnittstellen mit dem realen zu beeinflussenden Prozeß. Sind diese Ergebnisse zufriedenstellend, wird wiederum über entsprechend ausgestattete Code-Generatoren aus dem mathematischen Modell des Reglers ausführbarer Code für das Serien-Steuerungssystem generiert, so daß das in der Serienanwendung tatsächlich zum Einsatz kommende Steuerungssystem mit der Funktionalität ausgestattet werden kann, mit der es auch in der Serienanwendung ausgestattet sein muß.
Bevor das Serien-Steuerungssystem jedoch in Zusammenhang mit dem realen Prozeß erprobt wird, wird es eingehenden Tests unterzogen, sogenannten Hardware-in-the-Loop-Tests (HIL-Tests). Bei HIL-Tests wird das (Serien-) Steuerungssystem mit einer Testvorrichtung verbunden, wobei auf der Testvorrichtung mit Hilfe eines Umgebungsmodells die funktionale Umgebung des zu testenden Steuerungssystems simuliert wird; das Steuerungssystem wechselwirkt also mit einer virtuellen Umgebung, indem das Umgebungsmodell durch Ausgabe von Umgebungsmodelldaten über die Testvorrichtung an das Steuerungssystem und durch Aufnahme von Steuerungssystemdaten aus dem Steuerungssystem über einen Datenkanal mit der Testvorrichtung in Verbindung steht.
Die vorliegende Erfindung wird am Beispiel eines solchen HIL-Tests erläutert, sie ist jedoch begrifflich nicht auf eine solche Testsituation beschränkt, vielmehr ist sie auf den Test eines beliebigen Steuerungssystems anwendbar, das mit einer Testvorrichtung in Verbindung steht und mittels eines Umgebungsmodells überprüft wird, das auf der Testvorrichtung betrieben wird.
Bei dem Steuerungssystem kann es sich beispielsweise im Bereich automotiver Anwendungen um ein Motor-Steuergerät handeln, wobei das Umgebungsmodell dieses Motor-Steuergeräts dann ein Motor-Modell ist, das in Echtzeit auf der Testvorrichtung betrieben wird. Genauso könnte es sich aber auch um ein fahr- und motordynamisches Modell eines ganzen Fahrzeugs handeln, das in einer virtuellen Umgebung bewegt wird. Das Umgebungsmodell muß grundsätzlich nicht alle Schnittstellen des zu testenden Steuerungssystems abdecken, vielmehr können auch beliebige Teile der Umgebung durch reale Komponenten implementiert sein. Im vorangehenden Beispiel könnte dies bedeuten, daß das zu testende Steuerungssystem tatsächlich mit einem realen Verbrennungsmotor verbunden ist, wobei die Umgebung des Motors (z. B. Getriebe, Antriebsstrang, Fahrgestell und Straße) mit Hilfe eines auf der Testvorrichtung betriebenen Umgebungsmodells nachgebildet ist. Das Umgebungsmodell muß also kein vollständiges Umgebungsmodell sein, es kann direkt und/oder indirekt mit dem zu testenden Steuerungssystem in Verbindung stehen.
Der eigentliche Test des Steuerungssystems besteht darin, daß das Umgebungsmodell des Steuerungssystems in gezielter Weise beeinflußt wird, nämlich durch ein Testmodell zur Beeinflussung des Umgebungsmodells. Eine solche gezielte Beeinflussung kann beispielsweise beim Test eines Steuerungssystems für Bremssysteme darin liegen, daß die den Untergrund beschreibenden Parameter in weiten Grenzen variiert werden und das Brems-Steuerungssystem jeweils zur Vollbremsung veranlaßt wird. Dabei wird zur Beurteilung des Steuerungssystems meist das Verhalten des Umgebungsmodells herangezogen, das im vorangehenden Beispiel in der Ermittlung der Verzögerung des Gesamtsystems - also des Fahrzeugs - liegen könnte. Genauso gut ist es möglich, auch direkt Zustandsvariablen aus dem Steuerungssystem auszulesen und zur Beurteilung des Steuerungssystems heranzuziehen.
Aus dem Stand der Technik sind verschiedene Verfahren und Vorrichtungen bekannt, die den Test von Steuerungssystemen im vorgenannten Sinne ermöglichen. Es ist beispielsweise bekannt, zur Beeinflussung der Testvorrichtung, auf der das Umgebungsmodell betrieben wird, neben der Testvorrichtung eine weitere Experimentiervorrichtung vorzusehen, die mit der Testvorrichtung in Verbindung steht. Auf der Experimentiervorrichtung - in der Regel ein Standard-PC - wird ein Testmodell ausgeführt, das über die Datenverbindung zwischen Experimentiervorrichtung und Testvorrichtung das Umgebungsmodell auf der Testvorrichtung in der gewünschten Weise beeinflußt. Dabei gestattet die Experimentiervorrichtung, das Testmodell mit einer grafischen Modellierungsumgebung zu entwerfen, wobei in Abhängigkeit von der Zeit und in Abhängigkeit von Modellgrößen des Umgebungsmodells eine bestimmte Testfunktionalität vorgegeben werden kann (dSPACE GmbH: "Automation-Desk: Test and Experiment Software"; Produktbeschreibung, Februar 2006). Der Nachteil bei dieser Vorgehensweise besteht darin, daß eine strenge Synchronisation zwischen dem Umgebungsmodell auf der Testvorrichtung und dem Testmodell auf der Experimentiervorrichtung nicht gewährleistet werden kann, da die Kopplung zwischen den beiden Vorrichtungen mit den die Kommunikation betreffenden Totzeiten verbunden ist. Darüber hinaus kann bei Verwendung eines nicht echtzeitfähigen Standard-Betriebssystems auf der Experimentiervorrichtung unter Umständen eine strenge Echtzeitfähigkeit nicht gewährleistet werden. Dies bedeutet, daß eine in einem bestimmten Berechnungsintervall des Umgebungsmodells geplante Beeinflussung des Umgebungsmodells nicht immer auch in diesem Berechnungsintervall stattfinden kann, was möglicherweise zur Fehlausführung und Fehlinterpretation des Tests führen kann.
Echtzeitfähigkeit im Sinne der vorliegenden Erfindung bedeutet, daß Vorgänge, deren Ausführung bis zu einem bestimmten Zeitpunkt vorgesehen und vorgegeben ist, auch strikt bis zu diesem Zeitpunkt ausgeführt und erledigt sein müssen. Die Frage der Echtzeitfähigkeit ist also nicht gebunden an ein absolutes Geschwindzgkeitsmaß für eine Berechnung, sondern sie ist lediglich an die Erfüllung der Bedingung gebunden, daß die innerhalb eines Zeitintervalls geplanten Aktionen auch innerhalb dieses Zeitintervalls ausgeführt werden können; Echtzeitfähigkeit ist folglich nicht zwingend die möglichst schnelle Ausführung verlangter Aktionen, sondern die sichere Ausführung dieser Aktionen innerhalb der dafür vorgesehenen Zeit.
Bei zeitdiskreten Systemen, die mit einer bestimmten - meist festen - Berechnungs- und Abtastfrequenz betrieben werden, entspricht die kürzeste Zeiteinheit der Länge des - fixen - Abtastintervalls des Steuerungssystems. Wenn das Steuerungssystem beispielsweise mit einer Millisekunde abgetastet und berechnet wird, wird das Umgebungsmodell üblicherweise zumindest auch mit dieser Abtastrate betrieben. Das bedeutet, daß die Modellgrößen des Umgebungsmodells - im systemtheoretischen Sinne also die Zustandsgrößen des Umgebungsmodells - mit einer Frequenz von 1 kHz berechnet werden und darauf fußend, ebenfalls mit einer Frequenz von 1 kHz, die Ausgangsgrößen des Umgebungsmodells berechnet und zur Beeinflussung des Steuerungssystems ausgegeben werden.
Alle Aktionen, die innerhalb eines Abtast- bzw. Berechnungsintervalls - im vorliegenden Beispiel also innerhalb einer Millisekunde - ausgeführt werden, finden für das zeitdiskrete Abtastsystem gleichzeitig statt; diese Aktionen sind voneinander zeitlich nicht unterscheidbar, Ausgehend von dieser Definition von Echtzeitfähigkeit und Gleichzeitigkeit, ist es also möglich, selbst wenn ein elektronisches Steuerungssystem bzw. eine Testvorrichtung verwendet wird, die Anweisungen nur strikt sequentiell verarbeiten kann, mehrere Aktionen gleichzeitig durchzuführen, sofern sie in dem gleichen Abtast- bzw. Berechnungsintervall ausgeführt werden.
Der Vorteil des zuvor beschriebenen Testverfahrens besteht darin, daß zur Durchführung des Tests das Umgebungsmodell weder angehalten noch verändert zu werden braucht, wobei Echtzeitbedingungen allerdings bei kleinen Abtastraten nicht sicher eingehalten werden können, da die üblichen Experimentiervorrichtungen auf Basis eines nicht echtzeitfähigen Betriebssystems keine zeitlich vorhersagbaren Ausführungen garantieren können.
Bei einem anderen aus dem Stand der Technik bekannten Verfahren zum Test eines elektronischen Steuerungssystems wird das Umgebungsmodell durch Aufrufe von Testfunktionen instrumentiert. Das Umgebungsmodell ist folglich nicht mehr unabhängig von dem durchzuführenden Test und muß immer
dann angepaßt werden, wenn der Test verändert wird. Nachteilig an diesem Verfahren ist, daß das Testmodell und das Umgebungsmodell funktional ausgesprochen abhängig voneinander sind, da das Umgebungsmodell mit speziellen, das Testmodell betreffenden Funktionsaufrufen instrumentiert werden muß (OPAL-RT TECHNOLOGIES INC.: "RT-LAB, Product Description, Feature Details, Typical Applications"; 2005). Dies schafft einen erheblichen Overhead innerhalb des Umgebungsmodells und führt daher - selbst wenn die Funktionalität des Testmodells eine "Null-Funktionalität" ist - unter Umständen zu erheblichen Laufzeit-Nachteilen. Ein weiteres Kennzeichen der funktionalen Abhängigkeit besteht darin, daß das Umgebungsmodell auch dann verändert werden muß, wenn sich eigentlich nur etwas an der Testfunktionalität ändert, weshalb insbesondere eine Veränderung der Testfunktionalität zur Laufzeit des Umgebungsmodells praktisch nicht bzw. nur in sehr engen Grenzen möglich ist.

Der Erfindung liegt daher die Aufgabe zugrunde, ein Verfahren und eine Vorrichtung zum Test eines elektronischen Steuerungssystems anzubieten, bei denen die oben genannten Nachteile - zumindest teilweise - vermieden werden.

Die zuvor aufgezeigte Aufgabe ist erfindungsgemäß nach einer ersten Lehre der Erfindung bei einem Verfahren zum Test wenigstens eines elektronischen Steuerungssystems mit einer Testvorrichtung und einem auf der Testvorrichtung berechneten Umgebungsmodell, wobei das Steuerungssystem über einen Datenkanal mit der Testvorrichtung in Verbindung steht und das Umgebungsmodell durch Ausgabe von Umgebungsmodelldaten über die Testvorrichtung an das Steuerungssystem und durch Aufnahme von Steuerungssystemdaten aus dem Steuerungssystem über den Datenkanal mit dem Steuerungssystem wechselwirkt, wobei auf der Testvorrichtung wenigstens ein Testmodell zur Beeinflussung des Umgebungsmodells und/oder der Berechnung des Umgebungsmodells und/oder des elektronischen Steuerungssystems ausgeführt wird, dadurch gelöst, daß das Testmodell bzw. die Testmodelle funktional unabhängig vom Umgebungsmodell und - im Testbetrieb - synchron mit dem Umgebungsmodell ausgeführt wird bzw. werden.
Das erfindungsgemäße Verfahren ist gegenüber dem aus dem Stand der Technik bekannten Verfahren in vielerlei Hinsicht vorteilhaft. Dadurch, daß das Testmodell funktional unabhängig vom Umgebungsmodell ausgeführt wird, muß das Umgebungsmodell nicht mehr mit gezielt plazierten Funktionsaufrufen mit bezug auf das Testmodell instrumentiert werden. Dies hat einerseits den Vorteil, daß das Umgebungsmodell universell einsetzbar ist, unabhängig von dem durchzuführenden Test, und andererseits bringt dieses Vorgehen den Vorteil mit sich, daß nicht genutzte Funktionsaufrufe in das Testmodell, die Laufzeit des Umgebungsmodells nicht mehr belasten. Ferner werden bei dem erfindungsgemäßen Verfahren Totzeiten und Asynchronitäten zwischen der Ausführung von Umgebungsmodell und Testmodell gegenüber solchen Verfahren vermieden, bei denen das Umgebungsmodell der Testvorrichtung von einer davon hardwaremäßig getrennten Konfigurationsvorrichtung beziehungsweise von einem auf der Konfigurationsvorrichtung betriebenen Testmodell beeinflußt wird.
In einer ersten vorteilhaften Ausgestaltung der Erfindung beeinflußt das Testmodell das Umgebungsmodell, indem es unter Kenntnis der Speicherorte der Modellgrößen des Umgebungsmodells diese Speicherorte beschreibt und/oder ausliest. Durch den direkten Zugriff des Testmodells auf die Modellgrößen des Umgebungsmodells kann auf einer Software-Schnittstelle zwischen den beiden Modellen verzichtet werden, was erhebliche Laufzeitvorteile mit sich bringt. Selbstverständlich muß die Kenntnis der Speicherorte keine unmittelbare Kenntnis sein, es kann sich auch um eine mittelbare Kenntnis der Speicherorte handeln. Bei einer mittelbaren Kenntnis der Speicherorte nutzt das Testmodell beispielsweise nur Referenzen auf Modellgrößen des Umgebungsmodells, die ihrerseits auf die tatsächlichen Speicherorte der Modellgrößen des Umgebungsmodells verweisen. Die Auflösung der Referenzen kann z. B. durch das zugrunde liegende Betriebssystem erfolgen.
Nach einer bevorzugten Ausgestaltung des erfindungsgemäßen Verfahrens wird eine Konfigurationsvorrichtung mit der Testvorrichtung über einen weiteren Datenkanal in Verbindung gebracht und das Testmodell und/oder das Umgebungsmodell nachfolgend über den weiteren Datenkanal von der Konfigurationsvornchtung auf die Testvorrichtung übertragen. Durch diese Ausgestaltung des Verfahrens ist es beispielsweise auch in besonders vorteilhafter Weise möglich, über die Konfigurationsvorrichtung, die beispielsweise aus einem handelsüblichen PC mit entsprechender Modellierungssoftware besteht, das Testmodell und/oder das Umgebungsmodell zu erstellen, abzuändern oder lediglich zu erfassen, um es dann gezielt auf die Testvorrichtung zu übertragen. Die Konfigurationsvorrichtung wird in dieser Ausgestaltung der Erfindung als Nutzerschnittstelle eingesetzt, über die der Nutzer Zugang zu der Zielhardware - also zu der Testvorrichtung - hat.
Das erfindungsgemäße Verfahren zeichnet sich in einer weiteren Ausgestaltung dadurch aus, daß zur Laufzeit des Umgebungsmodells die gleichzeitige Ausführung wenigstens eines der ausgeführten Testmodelle gestoppt wird, wodurch ein aus mehreren Testmodellen bestehender Ocsamttest in weiten Bereichen variiert werden kann. Ferner ist in dem erfindungsgemäßen Verfahren vorgesehen, daß wenigstens ein Testmodell - ersatzweise oder zusätzlich - auch während des Testbetriebs auf die Testvorrichtung geladen und dort zur Ausführung gebracht wird. Genauso gut kann selbstverständlich ein bereits auf der Testvorrichtung befindliches Testmodell zu einem beliebigen Zeitpunkt auf der Testvorrichtung zur Ausführung gebracht werden; dies ist unabhängig davon, ob das Testmodell unmittelbar zuvor auf die Testvorrichtung geladen worden ist oder ob das zu startende Testmodell bereits seit längerem auf der Testvorrichtung vorhanden gewesen ist.
Die synchrone Ausführung von Umgebungsmodell und Testmodell ist essentiell für den Test eines Steuerungssystems, weil nur dann z. B. reproduzierbare Testergebnisse gewährleistet werden können. Synchronität zwischen Umgebungs- und Testmodell bedeutet beispielsweise, daß innerhalb eines bestimmten Berechnungsintervalls des Umgebungsmodells ein bestimmter und bestimmbarer Teil des Testmodells ausgeführt wird.
Bei einer besonders bevorzugten Ausgestaltung des Verfahrens wird das Testmodell bedarfsweise in einem zum Umgebungsmodell asynchronen Betriebsmodus ausgeführt, um dann nachfolgend synchron mit dem Umgebungsmodell ausgeführt zu werden. Dies ist insbesondere dann vorteilhaft, wenn das Testmodell gestartet wird und im Rahmen des Starts beispielsweise umfangreiche Initialisierungen vorgenommen werden müssen. Solche Initialisierungsvorgänge können derart umfangreich sein, daß sie nicht innerhalb eines Abtastintervalls durchgeführt werden können, so daß dadurch ein Verstoß gegen die Echtzeitanforderungen bzw. gegen die Anforderung der Synchronität zwischen Testmodell und Umgebungsmodell provoziert würde. In einem solchen Fall sieht das erfindungsgemäße Verfahren vor, vorübergehend die Echtzeit- und Synchronitätsanforderungen zurückzustellen, bis der Berechnungsüberhang soweit abgebaut ist, daß das Testmodell mit dem Umgebungsmodell synchron und damit unter Wahrung der Echtzeitanforderungen wieder ausgeführt werden kann. Eine solche Situation wird vor allem dann auftreten, wenn ein Testmodell neu auf die Testvorrichtung geladen worden ist und in einen bereits laufenden Test des elektronischen Steuerungssystems integriert werden soll.
In einem weiteren bevorzugten Ausführungsbeispiel ist das erfindungsgemäße Verfahren derart ausgestaltet, daß das Testmodell in ein Ausführungsformat umgewandelt wird, das auf der Testvorrichtung durch einen Interpreter ausgeführt wird. In einer besonders bevorzugten Ausgestaltung besteht dieses Ausführungsformat in Byte-Code, der auf der Testvorrichtung von einem Echtzeit-Interpreter ausgeführt wird. Die Ausführung des - maschinenunabhängigen - Byte-Codes durch den Interpreter ist grundsätzlich mit einem Zeitnachteil verbunden, da der Interpreter, der häufig auch als virtuelle Maschine bezeichnet wird, den Byte-Code nicht direkt ausführen kann, sondern ihn vorgelagert zu übersetzen hat. Aus diesem Grund wird der Echtzeit-Interpreter bevorzugt im Zusammenhang mit einem Just-in-Time-Compiler verwendet, der zu Beginn der Laufzeit des Testmodells den Byte-Code einmalig in einen maschinenabhängigen Maschinen-Code übersetzt. Insbesondere in diesem Fall ist es sinnvoll, das Testmodell während der Übersetzungsphase in einem asynchronen Modus zum Umgebungsmodell zu betreiben, wie dies am Beispiel der Initialisierung eines Testmodells bereits beschrieben worden ist.
In einer weiteren vorteilhaften Ausgestaltung der Erfindung wird zur Synchronisierung des Testmodells mit dem Umgebungsmodell von dem Umgebungsmodell ein Aktivierungssignal zur Aktivierung des Testmodells generiert. Die Generierung des Aktivierungssignals durch das Umgebungsmodell steht im Einklang mit der Forderung nach funktionaler Unabhängigkeit zwischen dem Umgebungsmodell und dem Testmodell, da aus dem Umgebungsmodell keine das Testmodell unmittelbar betreffenden Funktionsaufrufe erfolgen, wie dies aus dem Stand der Technik bekannt ist. Das Aktivierungssignal dient lediglich als Taktgeber für die Ausführung des Testmodells, das jedoch vollkommen unabhängig vom Umgebungsmodell ausgeführt werden kann.

Es ist insbesondere vorgesehen, das Aktivierungssignal in jedem oder jedem ganzzahligen vielfachen Berechnungsintervall des Umgebungsmodells zu generieren, so daß das Testmodell auch als zeitdiskretes Abtastsystem berechnet werden kann. Das Aktivierungssignal wird von dem Umgebungsmodell in einer bevorzugten Ausgestaltung dann generiert, wenn sichergestellt ist, daß charakteristische Phasen der Modellberechnung bzw. -handhabung abgeschlossen sind. Zu solchen Phasen zählt beispielsweise die Erfassung aller Eingangsgrößen des Umgebungsmodells, die Berechnung der Zustandsgrößen des Umgebungsmodells aus den aktuellen Eingangsgrößen und aus vergangenen Zustandsgrößen des Umgebungsmodells oder auch die Ausgabe von Ausgangsgrößen aus dem Umgebungsmodell. Durch diese Handhabung des erfindungsgemäßen Verfahrens ist gewährleistet, daß sich das Umgebungsmodell in einem zeitlich konsistenten Zustand befindet und das Testmodell in Folge dessen auf einen konsistenten Satz von Modellgrößen des Umgebungsmodells zugreifen kann.

Nach einer weiteren vorteilhaften Ausgestaltung des erfindungsgemäßen Verfahrens wird durch das Aktivierungssignal ein Scheduling-Verfahren aktiviert, das die Ausführung des Testmodells koordiniert. Auch aus dieser Eigenschaft ist ersichtlich, daß durch das Aktivierungssignal eine funktionale Entkopplung zwischen Umgebungsmodell und Testmodell gewährleistet ist, da das Testmodell nachfolgend unabhängig vom Umgebungsmodell von einer übergeordneten Koordinierungseinheit - dem besagten Scheduling-Verfahren - koordiniert wird.

Eine weitere vorteilhafte Ausgestaltung des erfindungsgemäßen Verfahrens ist auf das Scheduling-Verfahren gerichtet, bei dem aufgrund eines externen Aktivierungssignals ein erster Scheduler aktiviert wird. Das Scheduling-Verfahren zeichnet sich dadurch aus, daß der erste Scheduler das Testmodell zur Ausführung bringt bzw. den Teil des Testmodells zur Ausführung bringt, der einem vorgegebenen Berechnungsintervall entspricht, und der erste Scheduler nach abgeschlossener Ausführung des Testmodells bzw. des vorgegebenen Teils des Testmodells die Beendigung der Berechnung durch ein Beendigungssignal anzeigt.

Damit der erste Scheduler in Aktion tritt, bedarf es eines Aktivierungssignals, das beispielsweise von einem Interrupt gebildet wird. Der auf diese Weise aktivierte erste Scheduler kann die Ausführung des Testmodells bzw. eines vorgegebenen Teils des Testmodells von weiteren Parametern abhängig machen. So können dem ersten Scheduler durch Übergabeparameter bei Aufruf Werte übergeben werden oder der Scheduler kann bei Aktivierung aus dazu vorgesehenen Speicherzellen entsprechende Parameter auslesen, die den ersten Scheduler darüber informieren, welche Testmodelle bzw. Teile von Testmodellen zu berechnen sind und für welches Berechnungsintervall diese Testmodelle bzw. Teile von Testmodellen ausgeführt werden sollen. Dadurch, daß der erste Scheduler nach abgeschlossener Ausführung des Testmodells bzw. des vorgegebenen Teils des Testmodells die Beendigung der Berechnung durch ein Beendigungssignal anzeigt, ist es über- bzw. nebengeordneten Systemen, wie z. B. dem Umgebungsmodell, möglich, zeitnah zu reagieren, um beispielsweise ihren Verlauf fortzusetzen.

Nach einer bevorzugten Ausgestaltung des Scheduling-Verfahrens ruft der erste Scheduler in dem Fall, daß das Testmodell mehrere gleichzeitig zu verarbeitende Teststränge aufweist, einen zweiten Scheduler unter Angabe der gleichzeitig zu verarbeitenden Teststränge auf, woraufhin der zweite Scheduler die Ausführung der gleichzeitig zu bearbeitenden Teststränge nacheinander veranlaßt und nach Beendigung aller gleichzeitig zu bearbeitenden Teststränge die Beendigung der Ausführung dem ersten Scheduler anzeigt, woraufhin der erste Scheduler die Beendigung der Berechnung durch ein Beendigungssignal anzeigt. Im einfachsten Fall arbeitet der zweite Scheduler stapelbasiert. Das bedeutet, daß die verschiedenen Teststränge als einzelne Stapel von Testfunktionen organisiert und in der dadurch vorgegebenen Reihenfolge bearbeitet werden, wobei ein Stapel nach dem anderen bearbeitet wird, sofern mehrer vorhanden sind.

Der Begriff der Gleichzeitigkeit ist hier genau so aufzufassen, wie er zuvor im Zusammenhang mit Echtzeit-Simulationen erläutert worden ist. Als gleichzeitig gelten auch im Sinne der zweiten Lehre all jene Vorgänge, die innerhalb der - vorgegebenen - kleinsten zeitlichen Auflösung der Testvorrichtung bearbeitet werden; folglich können auch in der physikalischen Zeit tatsächlich hintereinander vorgenommene Berechnungen im Sinne der angegebenen Definition als gleichzeitig aufgefaßt werden. Insofern ist es kein Widerspruch, daß der zweite, für die Bearbeitung der gleichzeitig zu verarbeitenden Teststränge eines Testmodells verantwortliche Scheduler die Ausführung der gleichzeitig zu bearbeitenden Teststränge nacheinander veranlaßt. Bei den gleichzeitig zu verarbeitenden Teststrängen innerhalb des Testmodells kann es sich beispielsweise einfach um die Generierung zweier verschiedener Testsignale handeln, mit denen ein Steuerungssystem beaufschlagt werden soll.

Das Scheduling-Verfahren erfährt eine besonders vorteilhafte Ausgestaltung dadurch, daß der erste Scheduler in dem Fall, daß mehrere Testmodelle bzw. Teile mehrerer Testmodelle gleichzeitig zu berechnen sind, den einen jedem Testmodell zugeordneten zweiten Scheduler aufruft, derart, daß immer nur ein zweiter Scheduler aktiv ist, der jeweils aktive zweite Scheduler dem ersten Scheduler die Beendigung der Ausführung des ihm zugeordneten Testmodells anzeigt, woraufhin der erste Scheduler einen weiteren - bislang unaktivierten - zweiten Scheduler aktiviert, bis alle Testmodelle bzw. Teile von Testmodellen berechnet worden sind, woraufhin der erste Scheduler die Beendigung der Berechnung durch ein Beendigungssignal anzeigt. Das beschriebene erfindungsgemäße Verfahren ist besonders übersichtlich und sehr einfach zu implementieren und gestattet es auf besonders einfache Weise, die vollständige Bearbeitung mehrerer Testmodelle zu überprüfen. Die verschiedenen Ausgestaltungen des Scheduling-Verfahrens bezüglich der Behandlung mehrerer gleichzeitig zu verarbeitender Teststränge innerhalb eines Testmodells und hinsichtlich der gleichzeitigen Bearbeitung mehrerer Testmodelle sind selbstverständlich ohne weiteres miteinander kombinierbar.

Nach einer weiteren Lehre der Erfindung ist die zuvor aufgezeigte Aufgabe erfindungsgemäß bei einer Testvorrichtung zum Test wenigstens eines elektronischen Steuerungssystems dadurch gelöst, daß das Testmodell funktional unabhängig vom Umgebungsmodell und - im Testbetrieb - synchron mit dem Umgebungsmodell ausführbar ist.

Die erfindungsgemäße Testvorrichtung ist in weiteren bevorzugten Ausführungsbeispielen weiterhin so ausgestaltet, daß mit ihr die Verfahrensschritte durchführbar sind, die im Rahmen dieser Erfindung hinsichtlich des Tests wenigstens eines elektronischen Steuerungssystems beschrieben worden sind.

Im einzelnen gibt es nun eine Vielzahl von Möglichkeiten, das erfindungsgemäße Verfahren zum Test eines elektronischen Steuerungssystems und die erfindungsgemäße Testvorrichtung auszugestalten und weiterzubilden. Dazu wird verwiesen sowohl auf die den Patentansprüchen 1 und 12 nachgeordneten Patentansprüche als auch auf die Beschreibung von in der Zeichnung dargestellten Ausführungsbeispielen des erfindungsgemäßen Testverfahrens und des Scheduling-Verfahrens. In der Zeichnung zeigen
- Fig. 1: eine schematische Darstellung eines Ausführungsbeispiels einer Anordnung aus elektronischem Steuerungssystem, Testvorrich- tung und Konfigurationsvorrichtung,
- Fig. 2: eine schematische Darstellung eines Ausführungsbeispiels des erfindungsgemäßen Testverfahrens, des Scheduling-Verfahrens und der erfindungsgemäßen Testvorrichtung,
- Fig. 3: eine schematische Darstellung eines weiteren Ausführungsbei- spiels des erfindungsgemäßen Testverfahrens, des Scheduling- Verfahrens und der erfindungsgemäßen Testvorrichtung,
- Fig. 4: eine schematische Darstellung eines weiteren Ausführungsbei- spiels des erfindungsgemäßen Testverfahrens, des Scheduling- Verfahrens und der erfindungsgemäßen Testvorrichtung,
- Fig. 5: eine Sinus-Kurve, die mit einem Ausführungsbeispiel des erfin- dungsgemäßen Testverfahrens, des Scheduling-Verfahrens und der erfindungsgemäßen Testvorrichtung erzeugt worden ist, und
- Fig. 6: das erfindungsgemäße Zusammenspiel der Komponenten des er- findungsgemäßen Testverfahrens, des Scheduling-Verfahrens und der erfindungsgemäßen Testvorrichtung bei der Generierung der Sinus-Kurve nach Fig. 5.

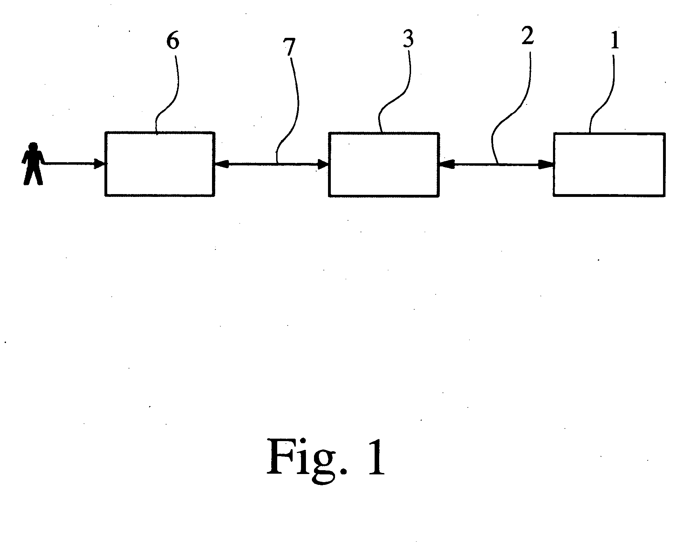

Die Fig. 1 bis 6 zeigen anhand verschiedener Ausführungsbeispiele jeweils bestimmte Aspekte des erfindungsgemäßen Testverfahrens, des Scheduling-Verfahrens und der erfindungsgemäßen Testvorrichtung.

Fig. 1 zeigt den typischen Aufbau einer Testumgebung zum Test eines elektronischen Steuerungssystems 1, das zur Durchführung des erfindungsgemäßen Verfahrens geeignet ist. Das zu testende elektronische Steuerungssystem 1 ist hier über einen Datenkanal 2 mit einer Testvorrichtung 3 verbunden. Auf der Testvorrichtung 3 wird ein Umgebungsmodell 4 berechnet, wobei das Umgebungsmodell 4 durch Ausgabe von Umgebungsmodelldaten über die Testvorrichtung 3 an das Steuerungssystem 1 und durch Aufnahme von Steuerungssystemdaten aus dem Steuerungssystem 1 über den Datenkanal 2 mit dem Steuerungssystem 1 wechselwirkt.

Der Test des Steuerungssystems 1 über die Testvorrichtung 3 erfolgt grundsätzlich durch Beeinflussung des Umgebungsmodells 4, das auf der Testvorrichtung 3 ausgeführt wird. Dazu wird auf der Testvorrichtung 3 einen Testmodell 5 zur Beeinflussung des Umgebungsmodells 4 und/oder der Berechnung des Umgebungsmodells 4 und/oder des elektronischen Steuerungssystems 1 ausgeführt, wobei das Testmodell 5 bzw. die Testmodelle 5, 5a, 5b funktional unabhängig vom Umgebungsmodell 4 und - im Testbetrieb - synchron mit dem Umgebungsmodell 4 ausgeführt wird bzw. werden. Das Umgebungsmodell 4 selbst bzw. die Berechnung des Umgebungsmodells 4 ist beispielsweise beeinflußbar, indem Parameter des Umgebungsmodells 4 verändert werden. Genauso gut ist es jedoch mit dem auf der Testvorrichtung 3 implementierten Verfahren möglich, über das Testmodell 5 direkt über den Datenkanal 2 das zu testende Steuerungssystems 1 zu beeinflussen, also beispielsweise mit Testsignalen zu beaufschlagen,

Vorteilhaft an dem in Fig. 1 dargestellten Ausführungsbeispiel der Testvorrichtung 3 beziehungsweise des Testverfahrens, das auf der Testvorrichtung 3 ausgeführt wird, ist, daß das Testmodell 5 funktional unabhängig von dem Umgebungsmodell 4 ausgeführt wird, so daß das Umgebungsmodell 4 auch bei Änderungen des Testmodells 5 nicht verändert oder angepaßt zu werden braucht.

In der Testvorrichtung 3 nach den Fig. 1 bis 4 wird die funktionale Unabhängigkeit des Umgebungsmodells 4 von dem Testmodell 5 erreicht, indem das Testmodell 5 unter Kenntnis der Speicherorte der Modellgrößen des Umgebungsmodells 4 diese Speicherorte beschreibt und/oder ausliest. Das Testmodell 5 kann beliebig verändert werden - auch zur Laufzeit des Umgebungsmodells 4 -, ohne daß das Umgebungsmodell 4 in irgendeiner Weise angepaßt werden müßte. Durch den derart realisierten direkten Zugriff des Testmodells 5 auf die Modellgrößen des Umgebungsmodells 4 kann auf eine Schnittstelle verzichtet werden, mit deren Hilfe die Modellgrößen des Umgebungsmodells 4 erst zugreifbar gemacht werden müßten, weshalb das dargestellte Verfahren erhebliche Laufzeitvorteile mit sich bringt.

In Fig. 1 ist ferner dargestellt, daß die Testvorrichtung 3 mit einer Konfigurationsvorrichtung 6 über einen weiteren Datenkanal 7 in Verbindung gebracht worden ist, so daß das Testmodell 5 und das Umgebungsmodell 4 nachfolgend über den weiteren Datenkanal 7 von der Konfxgurationsvorrichtung 6 auf die Testvorrichtung 3 übertragen werden konnten. Die Konfigurationsvorrichtung 6 dient in dem in Fig. 1 dargestellten Ausfiihrungsbeispiel als Nutzerschnittstelle, die es dem Nutzer erlaubt, die Testvorrichtung 3 wunschgemäß zu beeinflussen.

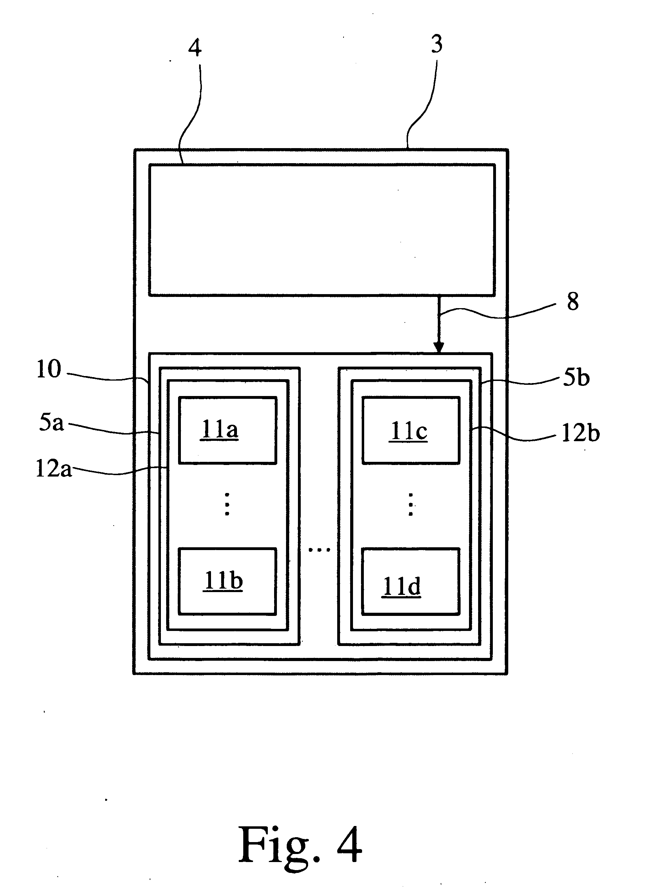

Aufgrund der funktionalen Unabhängigkeit zwischen dem Umgebungsmodell 4 und dem Testmodell 5 ist es ohne weiteres möglich, zur Laufzeit des Umgebungsmodells 4 die Ausführung des Testmodells 5 beziehungsweise eines der ausgeführten Testmodelle 5a, 5b (Fig. 4) auf der Testvorrichtung 3 zu stoppen, genauso wie es auch möglich ist, ein Testmodell 5 auf die Testvorrichtung 3 zu laden und dort zur Ausführung zu bringen. Die Aktivierung eines Testmodells 5, 5a, 5b kann in den dargestellten Ausführungsbeispielen unabhängig von dem Ladevorgang eines Testmodells 5, 5a, 5b angestoßen werden, beispielsweise, wenn zwar alle Testmodelle 5, 5a, 5b schon zu Beginn des Tests des Steuerungssystems 1 auf der Testvorrichtung 3 vorhanden waren, aber nicht gleichzeitig, sondern zeitversetzt zur Ausführung gebracht werden sollen.

Bei den in den Fig. 1 bis 6 dargestellten Ausführungsbeispielen wird jedes Testmodell 5, 5a, 5b zu Beginn seiner Laufzeit in einem zum Umgebungsmodell 4 asynchronen Betriebsmodus ausgeführt, bis all jene Initialisierungsvorgänge der Testmodelle 5, 5a, 5b abgeschlossen sind, die eine Ausführung des Testbetriebs in Echtzeit verhindern würden. Durch diese Ausgestaltung des Testverfahrens können die Echtzeit- und Synchronitätsanforderungen zeitweilig zurückgestellt werden, so daß keine Gefahr besteht, daß der Testvorgang aufgrund der Verletzung dieser Anforderungen abgebrochen wird, obwohl die fertig initialisierten Testmodelle 5, 5a, 5b ohne weiteres unter Erfüllung dieser Anforderungen auf der Testvorrichtung 3 ausgeführt werden können.

Die in den Fig, 1 bis 6 dargestellte Testvorrichtung bzw. das dargestellte Testverfahren ist so ausgestaltet, daß jedes Testmodell 5, 5a, 5b auf der Testvorrichtung 3 in einem solchen Ausführungsfbrmat vorliegt bzw. in ein solches Ausführungsformat übersetzt wird, das durch einen auf der Testvorrichtung 3 implementierten Interpreter ausgeführt wird. In den Ausführungsbeispielen handelt es sich dabei um einen Echtzeit-Interpreter, der die in Form von Byte-Code vorliegenden Testmodelle 5, 5a, 5b übersetzt und zur Ausführung bringt.

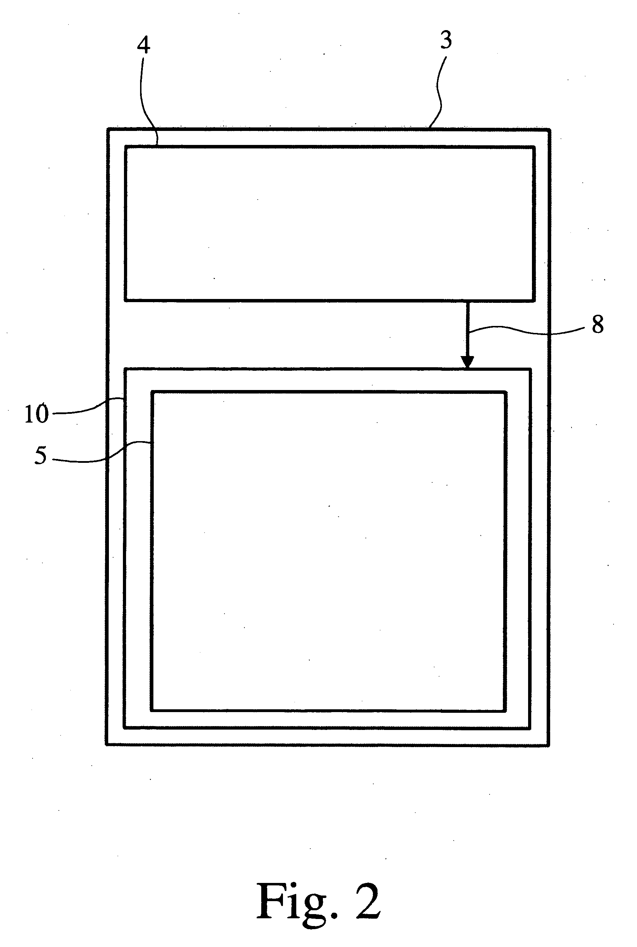

Bei den dargestellten Ausführungsbeispielen wird zur Synchronisierung des Testmodells 5, 5a, 5b mit dem Umgebungsmodell 4 von dem Umgebungsmodell 4 ein Aktivierungssignal 8 zur Aktivierung des Testmodells 5, 5a, 5b generiert. Das Aktivierungssignal 8 erfüllt die Punktion eines Taktgebers für die Ausführung der Testmodelle 5, 5a, 5b, wobei die geforderte funktionale Unabhängigkeit zwischen dem Umgebungsmodell 4 und den Testmodellen 5, 5a, 5b weiterhin gewahrt ist. Die Generierung des Aktivierungssignals 8 ist insbesondere in den Fig. 2 bis 4 und 6 dargestellt. In den Ausführungsbeispielen sondere in den Fig. 2 bis 4 und 6 dargestellt. In den Ausführungsbeispielen wird das Aktivierungssignal 8 in jedem Berechnungsintervall 9 des Umgebungsiuodells 4 generiert, so daß das Testmodell 5, 5a, 5b taktgenau synchron mit dem Umgebungsmodell 4 ausgeführt werden kann.

In den Ausführungsbeispielen wird das Aktivierungssignal 8 jeweils ausgegeben, nachdem alle Eingangsgrößen des Umgebungsmodells 4 eingelesen und alle Modellgrößen des Umgebungsmodells 4 - ggf. unter Nutzung dieser Eingangsgrößen - berechnet worden sind. Dadurch wird sichergestellt, daß die Beeinflussung des Umgebungsmodells 4 durch das Testmodell 5, 5a, 5b dann erfolgt, wenn das Umgebungsmodell einen konsistenten Datenbestand aufweist.

Wie in den Fig. 2 bis 4 und 6 dargestellt ist, wird durch das Aktivierungssignal 8 ein Scheduling-Verfahren aktiviert, das die Ausführungen des Testmodells 5 koordiniert, wodurch ebenfalls die funktionale Unabhängigkeit zwischen Umgebungsmodell 4 und Testmodell 5 gewahrt bleibt.

Das Scheduling-Verfahren ist in den Ausführungsbeispielen gemäß den Fig. 1 bis 6 in bestimmter Weise ausgestaltet, um die Echtzeit- und Synchronitätsanforderungen in besonders vorteilhafter Weise erfüllen zu können. Dazu wird aufgrund des Aktivierungssignals 8 zunächst ein erster Scheduler 10 aktiviert, wobei der erste Scheduler 10 das Testmodell 5 zur Ausführung bringt (Fig. 2). Die Ausführung kann in den Ausführungsbeispielen auch nur auf den Teil des Testmodells 5, 5a, 5b gerichtet sein, der einem vorgegebenen Berechnungsintervall 9 entspricht. Nach abgeschlossener Ausführung des Testmodells 5, 5a, 5b bzw. des vorgegebenen Teils des Testmodells 5, 5a, 5b zeigt der erste Scheduler 10 die Beendigung der Berechnung durch ein - nicht daxgestelltes - Beendigungssignal an. Daraus folgt, daß der erste Scheduler 10 die Ausführung des Testmodells 5, 5a, 5b von weiteren Parametern abhängig machen kann, wie zum Beispiel der Systemzeit oder dem aktuellen Berechnungsintervall 9. Diese Parameter werden dem ersten Scheduler 10 in den dargestellten Ausführungsbeispielen als Aufrufparameter übergeben.

In anderen - hier nicht dargestellten - Ausführungsbeispielen erhält der erste Scheduler 10 diese und andere Parameter durch Auslesen eines dafür vorgesehenen Parameter-Speicherbereichs. Diese Parameter können ganz allgemein auch Informationen darüber enthalten, welche der Testmodelle 5, 5a, 5b ausgeführt oder gestoppt werden sollen.

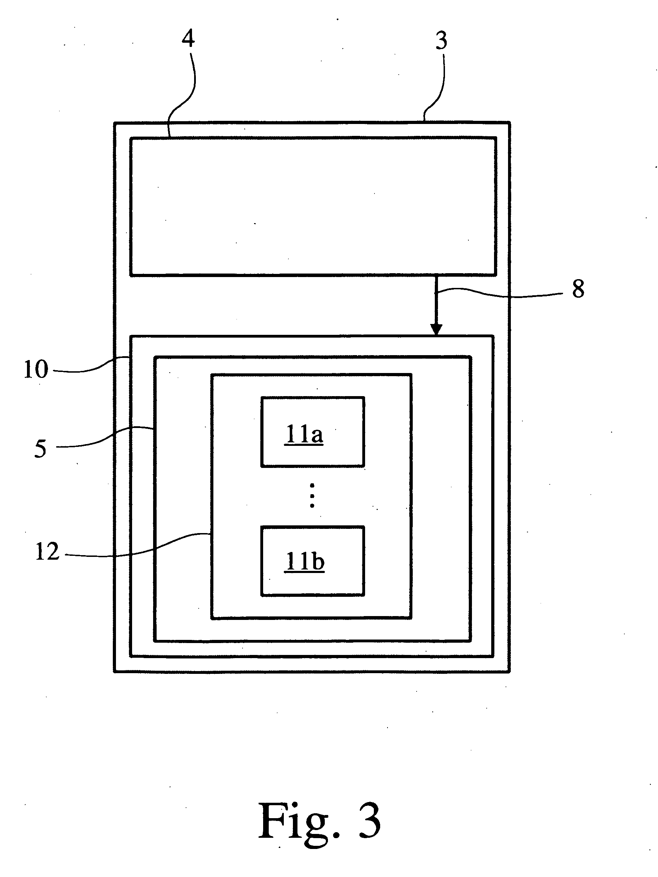

Ein Testmodell 5, 5a, 5b kann mehrere Teststränge 11a, 11b bzw. 11c, 11d umfassen, wobei unter Teststrängen 11a, 11b, 11c, 11d solche Teile eines Testmodells 5, 5a, 5b zu verstehen sind, die gleichzeitig - also innerhalb eines Berecbnungsintervalls 9 - ausgeführt werden sollen. In dem Fall, daß das Testmodell 5, 5a, 5b mehrere gleichzeitig zu verarbeitende Teststränge 11a, 11b, 11c, 11d aufweist, ruft der erste Scheduler 10 einen zweiten Scheduler 12, 12a, 12b - ggf. unter Angabe der gleichzeitig zu verarbeitenden Teststränge - auf, woraufhin der zweite Scheduler 12, 12a, 12b die Ausführung der gleichzeitig zu bearbeitende Teststränge 11a, 11b, 11c, 11d nacheinander veranlaßt und nach Beendigung aller gleichzeitig zu bearbeitenden Teststränge 11a, 11b, 11c, 11d die Beendigung der Ausführung dem ersten Scheduler 10 anzeigt. Der erste Scheduler 10 zeigt die Beendigung der Berechnung daraufhin durch ein Beendigungssignal an. Fig. 3 stellt dar, daß ein einziges Testmodell 5 mehrere Teststränge 11a, 11b umfaßt, die mit Hilfe des aufgezeigten Verfahrens systematisch bearbeitet werden.

In dem Fall, daß mehrere Testmodelle 5, 5a, 5b bzw. Teile mehrerer Testmodelle 5, 5a, 5b gleichzeitig zu berechnen sind, ist in dem Ausführungsbeispiel gemäß Fig. 4 vorgesehen, daß der erste Scheduler 10 jedem Testmodell 5, 5a, 5b einen zweiten Scheduler 12a, 12b zuordnet und den einen jedem Testmodell 5, 5a, 5b zugeordneten zweiten Scheduler 12a, 12b aufruft, derart, daß immer nur ein zweiter Scheduler 12a, 12b aktiv ist, der jeweils aktive zweite Scheduler 12a, 12b dem ersten Scheduler 10 die Beendigung der Ausführung des ihm zugeordneten Testmodells 5, 5a, 5b anzeigt, woraufhin der erste Scheduler 10 einen weiteren - bislang unaktivierten - zweiten Scheduler 12a, 12b aktiviert, bis alle Testmodelle 5, 5a, 5b bzw. Teile von Testmodellen 5, 5a, 5b berechnet worden sind, woraufhin der erste Scheduler 10 die Beendigung der Berechnung durch ein Beendigungssignal anzeigt. Dieses Verfahren ist besonders übersichtlich und einfach zu implementieren und ermöglicht es auf einfache Weise, die vollständige Bearbeitung mehrerer Testmodelle 5, 5a, 5b zu überprüfen.

Das Ausführungsbeispiel gemäß Fig. 4 zeigt ferner, daß die beschriebenen Eigenschaften, des Scheduling-Verfahrens auch kombiniert eingesetzt werden können, also beispielsweise in dem Fall, daß mehrere der Testmodelle 5, 5a, 5b parallele Teststränge 11a, 11b, 11c, 11d aufweisen.

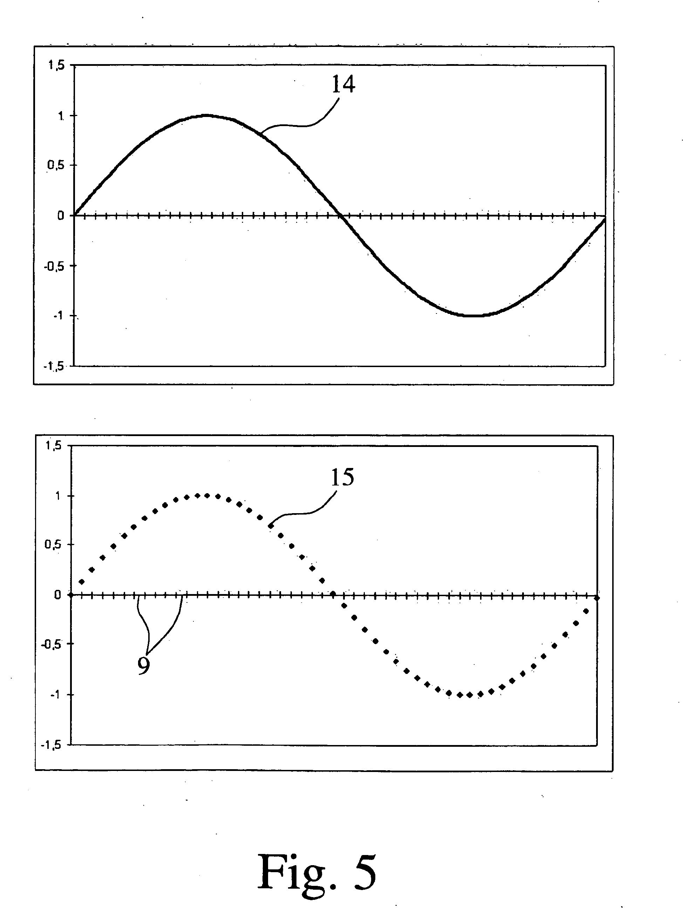

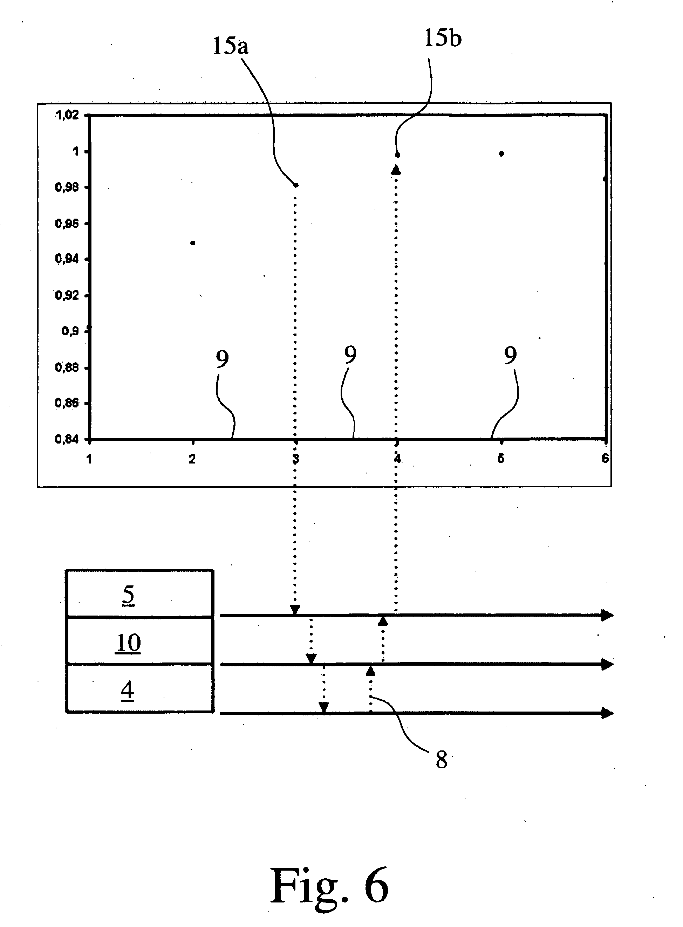

Das in den Fig. 5 und 6 dargestellte Ausführungsbeispiel erläutert die Funktionsweise des Testverfahrens, des Scheduling-Verfahrens und der Testvorrichtung anhand eines praktischen Beispiels, bei dem durch die Testvorrichtung 3 ein sinusförmiges Signal als Testsignal ausgegeben werden soll. Fig. 5 zeigt ein kontinuierliches sinusförmiges Signal 14 als auch ein von der Testvorrichtung 3 bzw, dem Testmodell 5 unter Berücksichtigung der Berechnungsintervalle 9 des Umgebungsmodells 4 zu generierendes zeitdiskretes Signal 15, das dem zeitlich diskretisierten kontinuierlichen Signal 14 entspricht.

Startpunkt der Betrachtung ist in Fig. 6 die erfolgreiche Berechnung des diskreten Signalwertes 15a zu Beginn des mit Zeiteinheit "3" bezeichneten Berechnungsintervalls; zur Vereinfachung wird angenommen, daß die Tesimodelle immer zu Anfang eines jeden Berechnungsintervalls 9 ausgeführt werden, Die Berechnung erfolgte durch Ausführung des Testmodells 5 nahe dem Zeitpunkt "3". Nach vollzogener Berechnung des Signalwertes 15a verweist der erste Scheduler 10 durch Ausgabe eines Beendigungssignals wieder auf das Umgebungsmodell 4 zurück (gestrichelte, vertikal nach unten weisende Pfeile in Fig. 6).

Bei Erreichen des nächsten Berechnungsintervalls 9 zum Zeitpunkt von "4" Zeiteinheiten generiert das Umgebungsmodell 4 durch das Aktivierungssignal 8 wiederum den ersten Scheduler 10, der daraufhin die Berechnung des Testmodells 5 für das nunmehr aktuelle Berechnungsintervall 9 anstößt, was in der Berechnung des Signalwertes 15b endet (gestrichelte, vertikal nach oben weisende Pfeile in Fig. 6). Der beschrieben Vorgang wird für die nächsten Berecbnungsintervalle 9 sinngemäß fortgesetzt.

## Patentansprüche

1. Verfahren zum Test wenigstens eines elektronischen Steuerungssystems (1), wobei das Steuerungssystem (1) über einen Datenkanal (2) mit einer Testvorrichtung (3) in Verbindung steht, auf der Testvorrichtung (3) wenigstens ein Umgebungsmodell (4) berechnet wird und das Umgebungsmodell (4) durch Ausgabe von Umgebungsmodelldaten über die Testvorrichtung (3) an das Steuerungssystem (1) und durch Aufnahme von Steuerungssystemdaten aus dem Steuerungssystem (1) über den Datenkanal (2) mit dem Steuerungssystem (1) wechselwirkt, wobei auf der Testvorrichtung (3) wenigstens ein Testmodell (5) zur Beeinflussung des Umgebungsmodells (4) und/oder der Berechnung des Umgebungsmodells (4) und/ oder des elektronischen Steuerungssystems (1) ausgeführt wird,
**dadurch gekennzeichnet,**
**daß** das Testmodell (5) bzw. die Testmodelle (5a, 5b) funktional unabhängig vom Umgebungsmodell (4) und - im Testbetrieb - synchron mit dem Umgebungsmodell (4) ausgeführt wird bzw. werden.

2. Verfahren nach Anspruch 1, **dadurch gekennzeichnet, daß** das Testmodell (5) das Umgebungsmodell (4) beeinflußt, indem es unter Kenntnis der Speicherorte der Modellgrößen des Umgebungsmodells (4), diese Speicherorte beschreibt und/oder ausliest.

3. Verfahren nach Anspruch 1 oder 2, **dadurch gekennzeichnet, daß** eine Konfigurationsvorrichtung (6) mit der Testvorrichtung (3) über einen weiteren Datenkanal (7) in Verbindung gebracht wird und das Testmodell (5) und/oder das Umgebungsmodell (4) nachfolgend über den weiteren Datenkanal (7) von der Konfigurationsvorrichtung (6) auf die Testvorrichtung (3) übertragen werden.

4. Verfahren nach einem der Ansprüche 1 bis 3, **dadurch gekennzeichnet, daß** zur Laufzeit des Umgebungsmodells (4) die gleichzeitige Ausführung wenigstens eines der ausgeführte Testmodelle (5a, 5b) gestoppt wird und/oder wenigstens ein Testmodell (5a, 5b) - ersatzweise oder zusätzlich - auf die Testvorrichtung (3) geladen und dort zur Ausführung gebracht wird.

5. Verfahren nach einem der Ansprüche 1 bis 4, **dadurch gekennzeichnet, daß** das Testmodell (5), insbesondere wenn es neu auf die Testvorrichtung (3) geladen worden ist, bedarfsweise - insbesondere zu Beginn seiner Laufzeit zur Initialisierung - in einem zum Umgebungsmodell (4) asynchronen Betriebsmodus ausgeführt wird.

6. Verfahren nach einem der Ansprüche 1 bis 5, **dadurch gekennzeichnet, daß** das Testmodell (5) in ein Ausführungsformat umgewandelt wird, das auf der Testvorrichtung (3) durch einen Interpreter ausgeführt wird, insbesondere das Testmodell (5) in Byte-Code umgewandelt wird, der von einem Echtzeit-Interpreter auf der Testvorrichtung ausgeführt wird.

7. Verfahren nach einem der Ansprüche 1 bis 6, **dadurch gekennzeichnet, daß** das Umgebungsmodell (4) zur Synchronisierung des Testmodells (5) ein Aktivierungssignal (8) zur - mittelbaren oder unmittelbaren - Aktivierung des Testmodells (5) generiert, wobei das Aktivierungssignal (8) insbesondere in jedem oder jedem ganzzahligen Vielfachen Berechnungsintervall (9) des Umgebungsmodells (4) generiert wird.

8. Verfahren nach Anspruch 7, **dadurch gekennzeichnet, daß** das Aktivierungssignal (8) ein Scheduling-Verfahren aktiviert, das die Ausführung des Testmodells (5) koordiniert.

9. Verfahren nach Anspruch 8, **dadurch gekennzeichnet, daß** das Scheduling-Verfahren zur Ausführung wenigstens eines Testmodells (5) auf einer Testvorrichtung (3) dient, wobei aufgrund eines externen Aktivierungssignals (8) ein erster Scheduler (10) aktiviert wird, daß der erste Scheduler (10) das Testmodell (5) zur Ausführung bringt bzw. den Teil des Testmodells (5) zur Ausführung bringt, der einem vorgegebenen Berechnungsintervall (9) entspricht und der erste Scheduler (10) nach abgeschlossener Ausführung des Testmodells (5) bzw. des vorgegeben Teils des Testmodells (5) die Beendigung der Berechnung durch ein Beendigungssignal anzeigt.

10. Verfahren nach Anspruch 9, **dadurch gekennzeichnet, daß** der erste Scheduler (10) in dem Fall, daß das Testmodell (5) mehrere gleichzeitig zu verarbeitende Teststränge (11a, 11b; 11c, 11d) aufweist, einen zweiten Scheduler (12) unter Angabe der gleichzeitig zu verarbeitenden Teststränge (11a, 11b; 11c, 11d) aufruft, woraufhin der zweite Scheduler (12) die Ausführung der gleichzeitig zu bearbeitenden Teststränge (11a, 11b; 11c, 11d) nacheinander veranlaßt und nach Beendigung aller gleichzeitig zu bearbeitenden Teststränge (11a, 11b; 11c, 11d) die Beendigung der Ausführung dem ersten Scheduler (10) anzeigt, woraufhin der erste Scheduler (10) die Beendigung der Berechnung durch ein Beendigungssignal anzeigt.

11. Verfahren nach Anspruch 9 oder 10, **dadurch gekennzeichnet, daß** der erste Scheduler (10) in dem Fall, daß mehrere Testmodelle (5a, 5b) bzw. Teile mehrerer Testmodelle (5a, 5b) gleichzeitig zu berechnen sind, den einem jeden Testmodell (5a, 5b) zugeordneten zweiten Scheduler (12a, 12b) aufruft, derart, daß immer nur ein zweiter Scheduler (12a, 12b) aktiv ist, der jeweils aktive zweite Scheduler (12a, 12b) dem ersten Scheduler (10) die Beendigung der Ausführung des ihm zugeordneten Testmodells (5a, 5b) anzeigt, woraufhin der erste Scheduler (10) einen weiteren - bislang unaktivierten- zweiten Scheduler (12a, 12b) aktiviert, bis alle Testmodelle (5a, 5b) bzw. Teile von Testmodellen (5a, 5b) berechnet worden sind, woraufhin der erste Scheduler (10) die Beendigung der Berechnung durch ein Beendigungssignal anzeigt.

12. Testvorrichtung (3) zum Test wenigstens eines elektronischen Steuerungssystems (1), wobei die Testvorrichtung (3) über einen Datenkanal (2) mit dem Steuerungssystem (1) in Verbindung bringbar ist, mit der Testvorrichtung (3) wenigstens ein Umgebungsmodell (4) berechnet wird und das Umgebungsmodell (4) durch Ausgabe von Umgebungsmodelldaten an das Steuerungssystem (1) und durch Aufnahme von Steuerungssystemdaten aus dem Steuerungssystem (1) über den Datenkanal (2) mit dem Steuerungssystem (1) wechselwirken kann, wobei auf der Testvorrichtung (3) wenigstens ein Testmodell (5) zur Beeinflussung des Umgebungsmodells (4) und/oder der Berechnung des Umgebungsmodells (4) und/ oder des elektronischen Steuerungssystems (1) ausgeführt wird,
**dadurch gekennzeichnet,**
**daß** das Testmodell (5) funktional unabhängig vom Umgebungsmodell (4) und - im Testbetrieb - synchron mit dem Umgebungsmodell (4) ausgeführt wird.

13. Testvorrichtung nach Anspruch 12, **dadurch gekennzeichnet, daß** mit ihr die Verfahrensschritte nach einem der Ansprüche 1 bis 8 durchführbar sind.

## Claims

1. Method for testing at least one electronic control system (1), the control system (1) being connected to a test apparatus (3) via a data channel (2), at least one environment model (4) being calculated in the test apparatus (3), and the environment model (4) interacting with the control system (1) via the data channel (2) by outputting environment model data to the control system (1) via the test apparatus (3) and by including control system data from the control system (1), at least one test model (5) being executed in the test apparatus (3) in order to influence the environment model (4) and/or the calculation of the environment model (4) and/or the electronic control system (1),
**characterized in that**
the test model (5) or the test models (5a, 5b) is/are executed in a manner functionally independent of the environment model (4) and - during test operation - in synchronism with the environment model (4).

2. Method according to Claim 1, **characterized in that** the test model (5) influences the environment model (4) in that, with knowledge of the storage locations of the model variables of the environment model (4), it writes to and/or reads from these storage locations.

3. Method according to Claim 1 or 2, **characterized in that** a configuration apparatus (6) is connected to the test apparatus (3) via a further data channel (7), and the test model (5) and/or the environment model (4) is/are then transmitted from the configuration apparatus (6) to the test apparatus (3) via the further data channel (7).

4. Method according to one of Claims 1 to 3, **characterized in that**, at the runtime of the environment model (4), the simultaneous execution of at least one of the test models (5a, 5b) being executed is stopped and/or at least one test model (5a, 5b) is alternatively or additionally loaded onto the test apparatus (3) and is executed there.

5. Method according to one of Claims 1 to 4, **characterized in that** the test model (5) is executed, if necessary - in particular at the start of its runtime for the purpose of initialization - in an operating mode which is asynchronous with respect to the environment model (4), in particular if the test model has been recently loaded onto the test apparatus (3).

6. Method according to one of Claims 1 to 5, **characterized in that** the test model (5) is converted into an execution format which is executed in the test apparatus (3) by an interpreter, in particular the test model (5) is converted into byte code which is executed in the test apparatus by a real-time interpreter.

7. Method according to one of Claims 1 to 6, **characterized in that**, in order to synchronize the test model (5), the environment model (4) generates an activation signal (8) for indirectly or directly activating the test model (5), the activation signal (8) being generated, in particular, in each calculation interval (9) or each integer multiple of the calculation interval (9) of the environment model (4).

8. Method according to Claim 7, **characterized in that** the activation signal (8) activates a scheduling method which coordinates the execution of the test model (5).

9. Method according to Claim 8, **characterized in that** the scheduling method is used to execute at least one test model (5) in a test apparatus (3), a first scheduler (10) being activated on the basis of an external activation signal (8), **in that** the first scheduler (10) executes the test model (5) or that part of the test model (5) which corresponds to a predefined calculation interval (9), and the first scheduler (10) indicates the completion of the calculation by means of a completion signal after execution of the test model (5) or the predefined part of the test model (5) has been concluded.

10. Method according to Claim 9, **characterized in that**, in the event of the test model (5) having a plurality of test strands (11a, 11b; 11c, 11d) to be processed at the same time, the first scheduler (10) calls up a second scheduler (12) and indicates the test strands (11a, 11b 11c, 11d) to be processed at the same time, whereupon the second scheduler (12) causes the test strands (11a, 11b 11c, 11d), which are to be processed at the same time, to be executed in succession and, after completion of all test strands (11a, 11b; 11c, 11d) to be processed at the same time, indicates the completion of execution to the first scheduler (10), whereupon the first scheduler (10) indicates the completion of the calculation by means of a completion signal.

11. Method according to Claim 9 or 10, **characterized in that**, in the event of a plurality of test models (5a, 5b) or parts of a plurality of test models (5a, 5b) needing to be calculated at the same time, the first scheduler (10) calls up the second scheduler (12a, 12b) associated with each test model (5a, 5b) in such a manner that only one second scheduler (12a, 12b) is ever active, the respectively active second scheduler (12a, 12b) indicates the completion of the execution of the test model (5a, 5b) associated with it to the first scheduler (10), whereupon the first scheduler (10) activates a further - previously unactivated - second scheduler (12a, 12b) until all test models (5a, 5b) or parts of test models (5a, 5b) have been calculated, whereupon the first scheduler (10) indicates the completion of the calculation by means of a completion signal.

12. Test apparatus (3) for testing at least one electronic control system (1), the test apparatus (3) being able to be connected to the control system (1) via a data channel (2), at least one environment model (4) being calculated using the test apparatus (3), and the environment model (4) being able to interact with the control system (1) via the data channel (2) by outputting environment model data to the control system (1) and by including control system data from the control system (1), at least one test model (5) being executed in the test apparatus (3) in order to influence the environment model (4) and/or the calculation of the environment model (4) and/or the electronic control system (1),
**characterized in that**
the test model (5) is executed in a manner functionally independent of the environment model (4) and - during test operation - in synchronism with the environment model (4).

13. Test apparatus according to Claim 12, **characterized in that** said apparatus can be used to carry out the method steps according to one of Claims 1 to 8.

## Revendications

1. Procédé de test d'au moins un système électronique de commande (1), dans lequel :
le système de commande (1) communique avec un dispositif de test (3) par un canal de données (2),
au moins un modèle d'environnement (4) est calculé sur le dispositif de test (3) et le modèle d'environnement (4) interagit avec le système de commande (1) par le canal de données (2) par transfert de données de modèle d'environnement par le dispositif de test (3) dans le système de commande (1) et par réception de données provenant du système de commande (1),
au moins un modèle de test (5) destiné à agir sur le modèle d'environnement (4) et/ou à agir sur le calcul du modèle d'environnement (4) et/ou sur le système électronique de commande (1) est exécuté sur le dispositif de test (3),
**caractérisé en ce que**
le modèle de test (5) ou les modèles de test (5a, 5b) sont exécutés de manière fonctionnellement indépendante du modèle d'environnement (4) et, en fonctionnement de test, de manière synchronisée par rapport au modèle d'environnement (4).

2. Procédé selon la revendication 1, **caractérisé en ce que** le modèle de test (5) agit sur le modèle d'environnement (4) en écrivant et/ou en lisant des grandeurs du modèle d'environnement (4) sur des emplacements de mémoire qu'il connaît.

3. Procédé selon les revendications 1 ou 2, **caractérisé en ce qu'**un dispositif de configuration (6) est mis en liaison avec le dispositif de test (3) par un autre canal de données (7) et **en ce que** le modèle de test (5) et/ou le modèle d'environnement (4) sont ensuite transférés du dispositif de configuration (6) au dispositif de test (3) par cet autre canal de données (7).

4. Procédé selon l'une des revendications 1 à 3, **caractérisé en ce que** pendant la durée de l'exécution du modèle d'environnement (4), l'exécution simultanée d'au moins l'un des modèles de test (5a, 5b) exécuté est arrêtée et/ou au moins un modèle de test (5a, 5b) est chargé en remplacement ou en supplément dans le dispositif de test (3) pour y être exécuté.

5. Procédé selon l'une des revendications 1 à 4, **caractérisé en ce qu'**en particulier lorsqu'il vient d'être chargé sur le dispositif de test (3) le modèle de test (5) est exécuté si nécessaire et **en ce qu'**en particulier au début de la durée de son initialisation, il est exécuté en un mode de fonctionnement asynchrone par rapport au modèle d'environnement (4).

6. Procédé selon l'une des revendications 1 à 5, **caractérisé en ce que** le modèle de test (5) est converti en un format d'exécution qui est exécuté par un interpréteur sur le dispositif de test (3), et en particulier **en ce que** le modèle de test (5) est converti en un code de bytes qui est exécuté en temps réel sur le dispositif de test par un interpréteur.

7. Procédé selon l'une des revendications 1 à 6, **caractérisé en ce que** pour la synchronisation du modèle de test (5), le modèle d'environnement (4) génère un signal d'activation (8) qui entraîne l'activation directe ou indirecte du modèle de test (5) et **en ce que** le signal d'activation (8) est généré en particulier lors de chaque intervalle de calcul (9) du modèle d'environnement (4) ou de chaque multiple entier de cet intervalle de calcul.

8. Procédé selon la revendication 7, **caractérisé en ce que** le signal d'activation (8) active un procédé de séquençage qui coordonne l'exécution du modèle de test (5) .

9. Procédé selon la revendication 8, **caractérisé en ce que** le procédé de séquençage sert à exécuter au moins un modèle de test (5) sur un dispositif de test (3), **en ce qu'**un premier module de séquençage (10) est activé suite à un signal d'activation externe (8), **en ce que** le premier module de séquençage (10) amène l'exécution du modèle de test (5) ou de la partie du modèle de test (5) qui correspond à un intervalle de calcul (9) prédéterminé et **en ce que** lorsque l'exécution du modèle de test (5) ou de la partie prédéterminée du modèle de test (5) est terminée, le premier module de séquençage (10) signale la fin du calcul par un signal de fin.

10. Procédé selon la revendication 9, **caractérisé en ce qu'**au cas où le modèle de test (5) présente plusieurs parcours de test (11a, 11b; 11c, 11d qui doivent être traités simultanément, le premier module de séquençage (10) appelle un deuxième module de séquençage (12) en indiquant les parcours de test (11a, 11b; 11c, 11d) qui doivent être traités simultanément, suite à quoi le deuxième module de séquençage (12) lance l'exécution successive des parcours de test (11a, 11b; 11c, 11d) qui doivent être traités simultanément et **en ce que** lorsque tous les parcours de test (11a, 11b; 11c, 11d) qui doivent être traités simultanément sont terminés, il signale la fin de l'exécution au premier module de séquençage (10), suite à quoi le premier module de séquençage (10) signale la fin du calcul par un signal de fin.

11. Procédé selon les revendications 9 ou 10, **caractérisé en ce qu'**au cas où plusieurs modèles de test (5a, 5b) ou parties de plusieurs modèles de test (5a, 5b) doivent être calculés simultanément, le module de séquençage (10) appelle le deuxième module de séquençage (12a, 12b) associé à chaque modèle de test (5a, 5b), **en ce que** seul un deuxième module de séquençage (12a, 12b) est actif à la fois, **en ce que** le deuxième module de séquençage (12a, 12b) actif signale au premier module de séquençage (10) la fin de l'exécution du modèle de test (5a, 5b) qui lui est associé, suite à quoi le premier module de séquençage (10) active un autre deuxième module de séquençage (12a, 12b) encore non activé, jusqu'à ce que tous les modèles de test (5a, 5b) ou parties de modèles de test (5a, 5b) aient été calculés, suite à quoi le premier module de séquençage (10) signale la fin du calcul par un signal de fin.

12. Dispositif de test (3) destiné à tester au moins un système électronique de commande (1),
le dispositif de test (3) pouvant être mis en communication avec le système de commande (1) par un canal de données (2),
un modèle d'environnement (4) étant calculé par le dispositif de test (3) et le modèle d'environnement (4) pouvant interagir par l'intermédiaire du canal de données (2) avec le système de commande (1) par transfert de données de modèle d'environnement au système de commande (1) et par réception de données du système de commande provenant du système de commande (1),
au moins un modèle de test (5) destiné à agir sur le modèle d'environnement (4) et/ou sur le calcul du modèle d'environnement (4) et/ou sur le système électronique de commande (1) étant exécuté sur le dispositif de test (3),
**caractérisé en ce que**
le modèle de test (5) est exécuté de manière fonctionnellement indépendante du modèle d'environnement (4) et de manière synchronisée par rapport au modèle d'environnement (4) lorsqu'il est en fonctionnement de test.

13. Dispositif de test selon la revendication 12, **caractérisé en ce qu'**il permet d'exécuter les étapes de procédé selon l'une des revendications 1 à 8.
